# EUROPEAN PATENT SPECIFICATION

(11) **EP 3 363 693 B1**
(45) Date of publication and mention of the grant of the patent: **18.09.2019**
(21) Application number: 17156252.3
(22) Date of filing: 15.02.2017
(51) Int. Cl.: B60R 22/46, F16D 41/12

(54) **CLUTCH FOR A SEAT BELT TENSIONER AND METHOD FOR TRANSFERRING THE CLUTCH FROM AN ENGAGED POSITION INTO A DECOUPLED POSITION**
KUPPLUNG FÜR EINEN SITZGURTSTRAFFER UND VERFAHREN ZUR ÜBERTRAGUNG DER KUPPLUNG VON EINER EINGERASTETEN POSITION IN EINE ENTKOPPELTE POSITION
EMBRAYAGE POUR UN TENDEUR DE CEINTURE DE SÉCURITÉ ET PROCÉDÉ POUR TRANSFÉRER L'EMBRAYAGE D'UNE POSITION ACCOUPLÉE VERS UNE POSITION DE DÉSACCOUPLEMENT

(43) Date of publication of application: 22.08.2018
(73) Proprietor: TRW Automotive GmbH, 73553 Alfdorf (DE)
(72) Inventor: Holbein, Wolfgang, 73553 Alfdorf (DE); Singh, Yashwanth, 73553 Alfdorf (DE)
(74) Representative: ZF TRW Patentabteilung

(56) References cited:
- WO-A1-2008/149746
- DE-A1-102011 119 343
- JP-B2- 4 913 159
- US-A1- 2009 294 565

## Description

The invention relates to a clutch for a seatbelt tensioner of a seatbelt system in a vehicle and to a method for transferring the clutch from an engaged position into a decoupled position.

Reversible seatbelt tensioners are used to increase the safety of the vehicle occupants and their driving comfort. A reversible drive, usually an electric motor, is coupled with a seatbelt spool axis to rotate the seatbelt spool of a seatbelt retractor and to take in loose seatbelt webbing, for instance in situations in which a control unit decides that this could be potentially beneficial. Then, a clutch is closed that couples the reversible drive with the seatbelt spool, and the seatbelt spool is rotated by the reversible drive to draw in seatbelt webbing. In the regular operating mode of the seatbelt system the clutch is open so that the seatbelt spool of the seatbelt retractor can draw in and give out the seatbelt webbing without being hindered by the reversible drive. An example for a clutch for a seatbelt tensioner showing the elements of the preamble of claim 1 is shown in DE 10 2011 119 343 A1.

A similar clutch is described in US2009/294565 A1. The tip portion of the pawl of this clutch engages with the toothing of the driven element.

JP 4 913159 B2 describes a clutch having pawl with two legs. That pawl is swingably attached to a pivot shaft provided on a ring plate and is formed so that its center of gravity is in the vicinity of the swinging center, so that erroneous operation of the pawl 49 due to vibration or the like can be reduced.

A similar clutch having a swinging pawl with two legs is described in WO2008/149746 A1.

Additionally to the reversible drive, the seatbelt tensioner usually is provided with a single-use pyrotechnic drive that will only be activated in case of an actual crash situation. The seatbelt spool is rotated by the pyrotechnic drive with a far higher rotational velocity than by the reversible drive. So as not to interfere with the pyrotechnic drive and also to prevent an interference with a subsequent load limiting function of the seatbelt system that reduces the force acting on the occupant after the pyrotechnic drive has finished its operation, the clutch should be decoupled from the seatbelt spool when the pyrotechnic drive is activated. The decoupling from the seatbelt spool should occur in a determined and controlled manner and should transfer the clutch reliably into a decoupled position in which no unintentional reengagement can occur.

The seatbelt spool, the clutch and also the reversible drive and the pyrotechnic drive usually are mounted on a frame of the seatbelt retractor.

Commonly, the pyrotechnic drive is mounted on the side of the seatbelt spool which is opposite the side at which the clutch is mounted. On activation of the pyrotechnic drive, a sudden impulse is generated, for instance caused by use of a so-called snake, a flexible, deformable body that is accelerated by a pyrotechnic charge. When the pyrotechnic charge is ignited, the snake is abruptly displaced by the developing gas pressure and interacts with a drive pinion connected to the seatbelt spool axis to rotate the seat belt spool. Due to the abrupt movement of the snake's mass and its impact on the drive pinion, an impulse is generated that acts perpendicularly to the seatbelt spool axis at one end of the seatbelt spool. This impulse is high enough that a slight elastic deformation of the seatbelt frame occurs, and the seatbelt spool axis is slightly displaced. After its first displacement, the seatbelt spool will rebound and eventually settle back in its regular place, and the seat belt spool will be rotated by the pyrotechnic drive. However, the initial impulse imparted by the snake causes the seatbelt spool also to move relative to the clutch (also referred to as "seatbelt spool impulse" in this application), in particular relative to the pawl of the clutch that interacts with the seatbelt spool in the engaged position.

In case of the pyrotechnic drive of the seat belt tensioner being activated, the seat belt spool should be rotated exclusively by the pyrotechnic drive, and the reversible drive should reliably stay decoupled.

It is an object of the present invention to provide a clutch that will be reliably decoupled on activation of the pyrotechnic drive.

This object is achieved by a clutch for a seat-belt tensioner in a vehicle, comprising the features of claim 1. The clutch for a seat belt tensioner in a vehicle comprises a driving element adapted for being rotated in a driving direction and in a releasing direction and a driven element connectable with a seat belt spool, the driving element and the driven element having a common rotation axis. A pawl is pivotally held at a pivot pin arranged on the driving element and forming a pivot axis. The pawl comprises at least one tooth for meshing with a toothing of the driven element. The pawl further comprises a rigid, radially inwardly directed contact protrusion at a radial inner face of the pawl for interacting with the driven element. The contact protrusion is arranged between the at least one tooth of the pawl and the pivot axis. The pawl is adapted to assume a disengaged position in which the pawl is not in engagement with the driven element and from which it can be pivoted radially inwards by turning the driving element in driving direction, an engaged position in which the pawl engages the driven element and couples the driving element with the driven element and decoupled position in which the pawl is not in engagement with the driven element and cannot be engaged with the driven element by turning the driving element in driving direction. The driven element interacts with the pawl at the at least one tooth and/or at the contact protrusion when the pawl moves from the engaged position into the decoupled position.

The driving element usually is connected to a reversible drive, normally an electric motor that can rotate the driving element in driving direction and in the reversed releasing direction. The driven element is usually fixedly coupled to a pyrotechnic drive so that the driven element is set into rotation when the pyrotechnic drive is activated.

As the pyrotechnic drive is fixedly mounted on the seatbelt retractor, the direction of the impulse delivered by the snake is defined. However, the pawl is mounted on the driving element and the driving element turns around the rotation axis of the clutch so that the pawl can be situated at any angular position with regard to the direction of the impulse caused by the activation of the pyrotechnic drive.

Depending on the motion of the spool and on the angular position of the pawl at the instant the pyrotechnic drive is activated, the driven element interacts with one or several of the teeth of the pawl and/or with the contact protrusion on the pawl. In either case, sufficient kinetic energy is transmitted from the driven element to the pawl for the pawl to be completely deflected outwards into the decoupled position.

When the seat belt spool impulse, i.e. the undefined linear motion of the seat belt spool caused by the activation of the pyrotechnic drive, is acting in a direction where the contact of the pawl with the driven element in the engaged position of the pawl is not affected, the pawl will stay engaged with the toothing of the driven element until the pyrotechnic drive starts to rotate the driven element. Then, an impulse will be transferred from the driven element to one or several teeth and/or to the contact protrusion of the pawl, and the kinetic energy transferred thereby will pivot the pawl outwards into its decoupled position.

However, when the seat belt spool impulse acts on the pawl in a way that a force is imparted to the pawl that deflects the pawl radially outwards, the contact protrusion will still be near enough to the driven element that one of the teeth of the driven element will hit the contact protrusion when the pyrotechnic drive starts rotating the driven element. In this case, the kinetic energy to pivot the pawl into its decoupled position is provided essentially by the contact between the driven element and the contact protrusion. An interaction of the driven element with a tooth of the pawl is not necessary.

As the contact protrusion is situated between the pivot axis and the tooth on the pawl, i.e. in the vicinity of the pivot axis, its motion radially outwards is slower than that of the tooth when the pawl is pivoted radially outwards. Therefore, it is ensured that one of the teeth of the driven element will contact the contact protrusion and will impart a sufficiently high kinetic energy to pivot the pawl outwards completely into its decoupled position.

When the pawl is in its disengaged (or neutral) position, the clutch is in its open, disengaged state. The driving element is not coupled with the driven element. Is the pawl in its engaged position, engaged with the driven element, the clutch is in its closed, engaged state. In the following, the terms "disengaged position" and "engaged position" will not only be used to describe pawl positions, but also to denote the open and closed state of the clutch, respectively.

When the pawl is in its decoupled position, a normal reengagement of the clutch is prevented. This implies that a rotation of the driving element in driving direction will not lead to the pawl being pivoted radially inwards and will not bring the pawl into the engaged position. The only operating position from which the pawl can be pivoted inwards and the clutch can be closed is the disengaged position.

However, in case of an unintentional decoupling when only the reversible drive is operated, is should be possible to reengage the clutch. To allow a controlled reengagement process, the clutch is preferably designed such that the pawl can be transferred from the decoupled position back into the neutral position, where the clutch is still open, but can be closed again. To this effect, the driving element may be rotated in releasing direction.

To engage the pawl from the disengaged position, the driving element is rotated in driving direction, moving the pawl into its engaged position in engagement with the driven element.

In a preferred embodiment, the clutch comprises a clutch disk ring having an outer essentially circular circumference and a clutch disk arm extending inwards into an opening enclosed by the clutch disk ring, the clutch disk arm interacting with the pawl to guide the pawl into and out of the engaged position. The clutch disk arm usually extends approximately radially inwards into the opening enclosed by the clutch disk ring and lies essentially in the same plane as the clutch disk ring.

The clutch disk arm advantageously is arranged near the middle of the extension of the pawl in circumferential direction. In this region, it is easily possible to design guiding geometries for interaction between the clutch disk arm and the pawl for guiding the pawl between its different positions. The guiding geometries on the pawl are preferably realized on two side faces limiting a recess in the surface of pawl in radial direction.

In the decoupled position, the pawl can be arrested by a latching connection between the clutch disk arm and the pawl.

In one preferred example, the clutch disk arm is hook-shaped, having a flexible section extending essentially radially outwards and ending in a free end.

Preferably, the latching connection is closed by the free end of the clutch disk arm snapping below a tangential protrusion on the side face of the recess in the pawl facing in driving direction.

The kinetic energy transferred to the pawl on activation of the pyrotechnic drive is preferably high enough to move the pawl further radially outwards than in its disengaged position and to deform the clutch disk arm far enough to close the latching connection.

In contrast thereto, during normal disengagement, the kinetic energy of the pawl is not high enough to close the latching connection.

Further, the clutch may comprise a retainer ring surrounding the outer circumference of the clutch disk ring and being coupled by friction with the clutch disk ring, the retainer ring being configured for limited rotation relative to a retaining structure arranged on a clutch housing. In specific situations, in particular during engagement and disengagement of the clutch, the retainer ring provides a limited angular rotation between the driving element and the clutch disk ring which is held back due to the friction coupling with the retainer ring. This limited angular relative rotation of the driving element and the clutch disk ring causes the interaction of the clutch disk arm and the pawl to guide the pawl between its different positions.

The contact protrusion preferably is arranged between the clutch disk arm and the pivot axis, while the at least one tooth is arranged between the clutch disk arm and the free end of the pawl. Providing the contact protrusion in this location ensures that the contact protrusion is still in reach for the teeth of the driven element, even when the seat belt spool impulse acts to deflect the pawl radially outwards.

In the engaged position, when the driven element is rotated by the driving element, the contact protrusion preferably does not transmit any angular momentum to the driven element. The driven element then is only rotated by the interaction with the teeth of the pawl that transfer the rotational energy of the reversible drive to the driven element. Therefore, the contact protrusion may have a rounded shape, as it is not necessary for a tooth of the driven element to hook behind the contact protrusion.

The contact protrusion may be arranged so that the driven gear always contacts the contact protrusion when the pawl moves from the engaged position into the decoupled position. With this design, the teeth of the pawl preferably serve only for a load transfer from the reversible drive to the driven element and are not used for the impulse transfer from the driven element to the pawl during decoupling. Independent of an angular position of the pawl on activation of the pyrotechnic drive, the impulse to pivot the pawl radially outwards into its decoupled position is always taken up by the contact protrusion in this design.

The contact protrusion preferably has a flank that in the engaged position of the pawl has essentially the same inclination as the teeth flanks of the driven element pointing in driving direction. The inclination of the flanks may differ for example about +/- 15°.

The flank of the contact protrusion may be inclined with regard to an imaginary line between the pawl pivot axis and a pawl stop for about 35° against the radial direction in a mathematical negative sense.

The flank preferably is arranged so that a force vector acting on the contact protrusion points between the pawl pivot axis and the radial direction so that a contact with a tooth of the driven element will always be able to pivot the pawl radially outwards.

The above mentioned object of the invention is also achieved with a method for transferring a clutch for a seat belt tensioner in a vehicle from the engaged position into the decoupled position, the clutch having the features described above, and the method having the following steps:
- A pyrotechnic drive coupled with the driven element is activated,
- an impulse acting in a radially outwards direction is introduced into the pawl by the driven element,
- the at least one tooth of the pawl looses contact with the driven element,
- a radially outwardly directed impulse is introduced to the contact protrusion by the driven element, and
- the pawl is pivoted radially outwards into the decoupled position as the driven element is rotated in driving direction by the pyrotechnic drive.

As already described above, when the pyrotechnic drive is activated while the pawl is in an angular position where the seatbelt spool impulse transfers a radially outwardly acting force to the pawl, and, therefore, the pawl teeth looses contact with the driven element, the driven element will contact the contact protrusion of the pawl and transfer a high enough kinetic energy to the pawl to pivot the pawl radially outwards completely into its decoupled position.

In certain situations, depending on the angular position of the pawl when the pyrotechnic drive is activated, a pulse may be transferred to the pawl first by the interaction of the driven element with the tooth of the pawl and subsequently also by the interaction of the driven element with the contact protrusion, when the pawl moves from the engaged position into the decoupled position. In this case, the pawl is impacted twice by the driven element, and the transfer of kinetic energy to the pawl is maximized.

In the method according to the invention it is also possible that in certain situation impulse is transferred to the pawl exclusively by the interaction of the driven element with the contact protrusion when the pawl moves from the engaged position into the decoupled position. In these situations, the teeth of the pawl are not used to transfer the pawl from the engaged position into the decoupled position.

Generally, the term "radially outwards" in this application is not only used in the true mathematical sense, but also to indicate a general motion of a component away from the rotation axis of the clutch.

A preferred embodiment of the invention is described in detail in the following with reference to the attached drawings, in which:
- Figure 1 shows a schematic plan view of a clutch for a seat belt tensioner according to the invention, in an engaged position;
- Figure 2 shows an enlarged detail of Figure 1;
- Figure 3 shows the clutch of Figure 1 in the engaged position, where the driven element and the pawl are in an optimal position for decoupling;
- Figure 4 shows an enlarged detail of Figure 3;
- Figure 5 shows the clutch of Figure 1 in a situation where the driven element is linearly displaced with regard to the pawl;
- Figure 6 shows an enlarged detail of Figure 5; and
- Figure 7 shows the clutch of Figure 1 in the decoupled position.

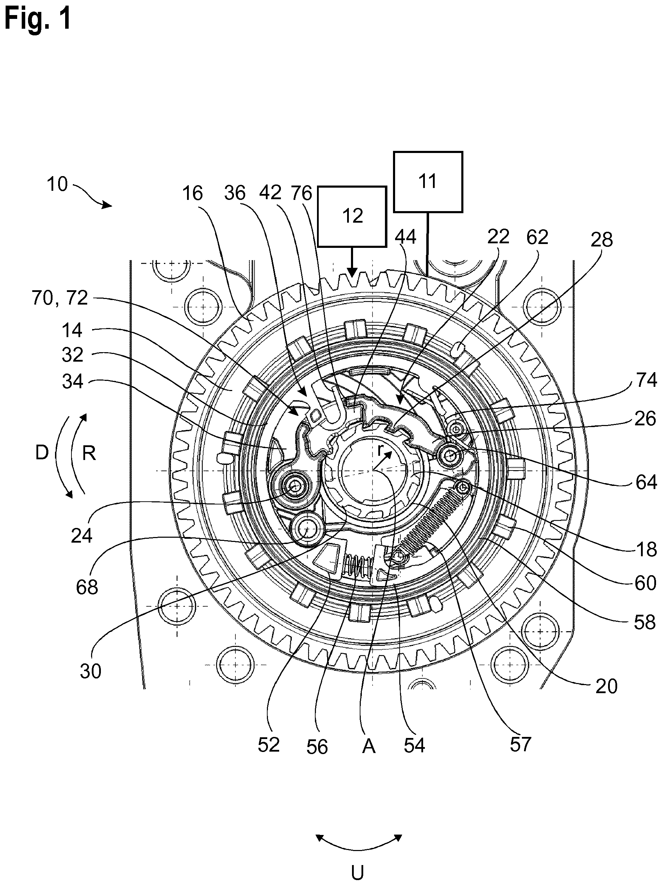

The figures show a clutch 10 for a seatbelt tensioner in a vehicle. Only the clutch is displayed in the figures. However, as is generally known in the art, the seatbelt tensioner is connected to a seatbelt retractor having a frame in which a seatbelt spool is rotatably arranged that can take up and give out seatbelt webbing. Usually, the clutch 10 is arranged at one side of the seatbelt spool, while a pyrotechnic drive 11 (schematically in Fig. 1) of the seatbelt tensioner, comprising a mass accelerated by a pyrotechnic charge on activation that interacts with a drive pinion connected to the seatbelt spool, is positioned at the opposite side of the seatbelt spool. The accelerated mass is for instance a so-called snake which is a cylindrical body of a deformable plastic material that is brought into contact with the drive pinion to set the seatbelt spool into a fast rotation.

The clutch 10 is connected to a reversible drive 12 (only schematically in Fig. 1) of the seatbelt tensioner, usually an electric motor, to turn the seatbelt spool in a driving direction D to take up seatbelt webbing under certain conditions. The reversible drive 12 can be operated repeatedly while the pyrotechnic drive 11 is a single-use device.

The clutch 10 has a disk-shaped driving element 14 that can be connected with the reversible drive 12 by a driving gear 16 that is part of the driving element 14.

Further, the clutch 10 has a driven element 18 arranged coaxially with the driving element 14 and connected with regard to rotation to the seatbelt spool and, thereby, to the pyrotechnic drive 11 (schematically indicated in Fig. 1). The seatbelt spool and the driven element 18 always rotate in the same direction and with the same velocity.

The driving element 14 and the driven element 18 have a common rotation axis A, the driven element 18 extending through a center opening 20 of the driving element 14. Generally, when a radial direction r and a circumferential direction U are discussed in this application, these directions always relate to the common rotation axis A.

The reversible drive 12 can rotate the driving element 14 in the driving direction D and in the opposite releasing direction R to transfer the clutch 10 into different operating positions. The driving direction D is indicated counterclockwise in the figures while the releasing direction R is indicated clockwise in the figures.

The clutch 10 serves to couple the reversible drive 12 to the seatbelt spool so that the driving element 14 can turn the seatbelt spool in the driving direction D to wind up seatbelt webbing to tighten the seatbelt around a vehicle occupant. This kind of seatbelt tensioning, also called pretensioning, takes place for instance when an electronic control unit detects an imminent dangerous situation in which the seatbelt should be tensioned as a measure of precaution. If the critical situation passes, the clutch 10 will be disengaged again so that the seatbelt spool again can turn unhindered in both directions.

When the clutch 10 is closed, the reversible drive 12 is connected to the seatbelt spool (Fig. 1). When the clutch 10 is opened in the neutral position, the reversible drive 12 is disengaged from the seatbelt spool (not shown).

The pyrotechnic drive 11 is arranged on the opposite side of the seatbelt spool from the clutch 10. It is only activated in case of an actual crash and will rotate the seatbelt spool in driving direction D to take up seatbelt webbing. This rotation caused by the pyrotechnic drive 11 is much faster than the rotation caused by the reversible drive 12.

The rotational motion of the driving element 14 is transmitted to the driven element 18 by a pawl 22 that is pivotally held on the driving element 14 at a pivot pin that may be formed integrally with the driving element 14. The pivot pin defines a pivot axis 24 for the pawl 22. The pivot axis 24 extends in parallel with the rotation axis A (and thus perpendicular to a plane defined by the driving element 14).

The pawl 22 has a generally curved shape that approximately follows the curvature of the driven element 18. The pawl 22 lies in a plane parallel to that of the driving element 14 and pivots essentially radially inwards towards the rotation axis A. In the region of its free end 26, the pawl 22 has several teeth 28 (in this example three teeth 28) that can come into engagement with teeth 30 of a toothing along the outer circumference of the driven element 18.

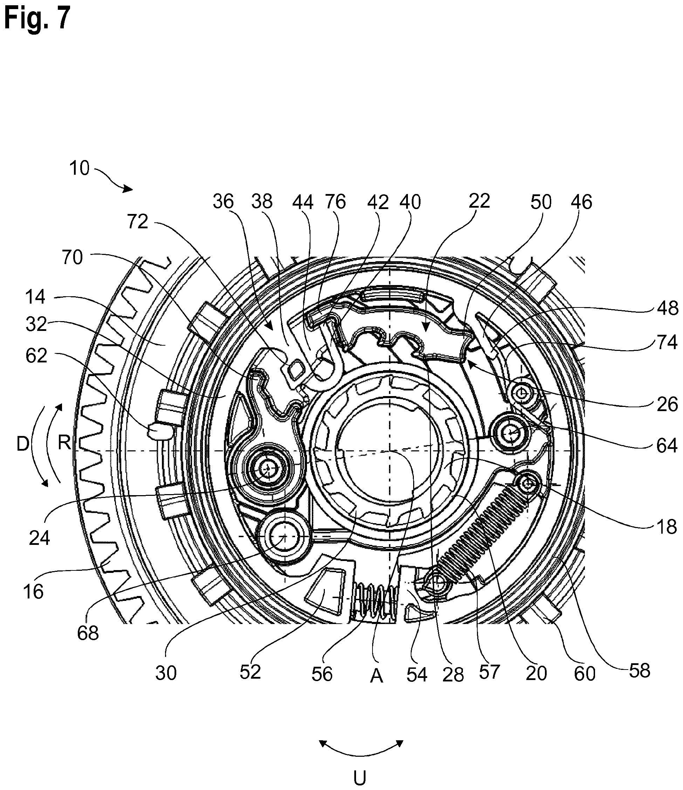

The pawl 22 can be pivoted around the pivot pin into several positions: a disengaged (or neutral) position in which the pawl 22 is not in engagement with the driven element 18 (not shown), an engaged position (e.g. Fig. 1), where the pawl 22 is in engagement with the driven element 18, and a decoupled position (see Fig. 7), where the pawl 22 is located radially further outwards than in the disengaged position and is locked against a regular (re)-engagement.

Engagement and disengagement of the pawl 22 by rotation of the reversible drive 12 in driving direction D and releasing direction R are the regular operations of the clutch. The pawl 22 will reach the decoupled position only when the pyrotechnic drive 11 is activated or due to an unintentional decoupling.

The pawl 22 is moved between the disengaged position and the engaged position by interaction with a clutch disk ring 32. The clutch disk ring 32 encloses an opening 34, is centered around the common rotation axis A and is arranged in a plane above the driving element 14 so that it surrounds the pawl 22.

The clutch disk ring 32 comprises a clutch disk arm 36 extending radially inwards from an inner circumference of the clutch disk ring 32.

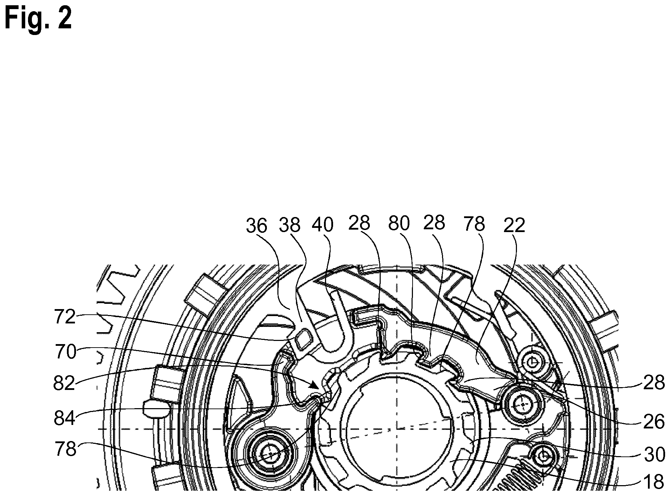

The clutch disk arm 36 shown here is hook-shaped (see also Fig. 2). The hook is formed by a rigid section 38 connected with the clutch disk ring 32 and extending inwards into the opening 34 enclosed by the clutch disk ring 32 and a flexible, free section 40 connected to the end of the rigid section 38 and extending outwards towards the clutch disk ring 32. The hook sections 38, 40 are connected by a U-shaped connecting portion. In an unstressed state the hook sections 38, 40 are essentially parallel to each other. The flexible section 40 ends in a free end 42 positioned on the far side of the first clutch disk arm 36 from the pivot axis 24.

The clutch disk arm 36 is arranged in an axial recess 44 in the body of the pawl 22 that is delimited by a left-hand side face and a right-hand side face, both side faces facing essentially in circumferential direction U. In the recess 44 the thickness of the pawl 22 is reduced in axial direction A with regard to the rest of the pawl 22. The recess 44 and the clutch disk arm 36 are located approximately in the middle of the pawl 22 regarding the extension of pawl 22 in circumferential direction U.

On the left and right-hand side faces of the clutch disk arm 36 and of the recess 44, interacting guiding geometries are provided that serve to guide the pawl 22 radially inwards into engagement with the driven element 18 during the engagement process and radially outwards again out of engagement with the driven element 18 back into the disengaged position when the driving element 14 is rotated in releasing direction R.

The clutch disk ring 32 is discontinuous in circumferential direction U. The gap between its two circumferential ends 52, 54 is bridged by an expansion spring 56 that presses the circumferential ends 52, 54 apart in circumferential direction U.

Also, the clutch disk ring 32 is coupled by a return spring 57 with the driving element 14 that allows only a certain relative angular displacement between the driving element 14 and the clutch disk ring 32. The return spring 57 extends parallel to the surface of the driving element 14.

The clutch disk ring 32 is surrounded by a retainer ring 58 to which the clutch disk ring 32 is coupled by friction at its inner circumference with the outer circumference of the clutch disk ring 32. The friction is at least partly provided by the expansion spring 56 pressing the circumferential ends 52, 54 of the clutch disk ring 32 apart. The clutch disk ring 32 and the retainer ring 58 are coupled by friction only. The retainer ring 58 has a plurality of radially extending spokes 60 that are arranged at regular distances along the outer periphery of the retainer ring 58. A retaining structure 62, here in form of several retaining pins distributed along the circumference of the retainer ring 58, limits the rotation of the retainer ring 58 to the distance between two adjacent spokes 60, for instance between 10° and 30°.

Instead of the retaining structure 62 described above, any different kind of retaining structure could be provided that allows a limited rotation of the retainer ring 58 in both directions D, R.

The driving element 14 can rotate relative to the clutch disk ring 32 when the clutch disk ring 32 is retained by friction on the retainer ring 58. At a certain threshold of the rotational force, however, the frictional forces will be overcome, and the clutch disk ring 32 will rotate together with the driving element 14.

To transfer the clutch 10 into its closed state (i.e. its engaged position), the pawl 22 has to be brought into engagement with the driven element 18.

For this purpose, the reversible drive 12 is activated and the driving element 14 starts to rotate in driving direction D. In the disengaged position of the pawl 22, the spokes 60 of the retainer ring 58 are distanced in driving direction D from the nearest stopping pin.

As the clutch disk ring 32 is coupled by the return spring 57 with the driving element 14, initially the clutch disk ring 32 is entrained by the rotating driving element 14. Due to the frictional force between the clutch disk ring 32 and the retainer ring 58, the retainer ring 58 is also entrained by the clutch disk ring 32 until the spokes 60 come into contact with the stopping pins of the retaining structure 62. Then, the retainer ring 58 stops rotating and, due to the frictional force between the retainer ring 58 and the clutch disk ring 32, the clutch disk ring 32 is also stopped from rotating.

This results in the driving element 14 rotating relative to the clutch disk arm 36, and the right-hand face of the recess 44 in the pawl 22 is pushed against the right-hand side (in the figures) of the flexible section 40 of the clutch disk arm 36. Thereby, the pawl 22 is pivoted radially inwards into engagement with the driven element 18. The teeth 28 of the pawl 22 mesh with the teeth 30 of the driven element 18 so that the driven element 18 is entrained in driving direction D by the pawl 22.

The inward movement of the pawl 22 continues until the free pawl end 26 comes into contact with a pawl stop 64 fixedly arranged on the driving element 14. The pawl stop 64 now also transfers load to the pawl 22 and, therefore, to the driven element 18. The center of the pawl stop 64 lies here on a straight line with the rotation axis A and the pawl pivot axis 24.

The relative motion between the driving element 14 and the clutch disk ring 32 continues until a clutch disk stop 68 on the driving element 14 comes into contact with the first circumferential end 52 of the clutch disk ring 32, which is formed here as a projection extending inwards towards the rotation axis A. From this moment on, the driving element 14 pushes the clutch disk ring 32 in driving direction D, and the clutch disk ring 32 rotates together with the driving element 14 and slides inside the retainer ring 58.

When the pyrotechnic drive 11 is not activated, the clutch 10 will be disengaged again and transferred back into the neutral position by rotating the reversible drive 12 in the releasing direction R.

To disengage the clutch 10, the pawl 22 rotates together with the driving element 14 relative to the clutch disk ring 32 which is again held by friction on the retainer ring 58. The left-hand face of the recess 44 (in the figures) comes into contact with the left-hand side of the rigid section 40 of the clutch disk arm 36.

The contact between the pawl 22 and the clutch disk arm 36 occurs between a protrusion 70 on the left-hand face of the recess 44 and a protrusion 72 of the left-hand side of the rigid section 40 of the first clutch disk arm 36. Each of the protrusions 70, 72 has a face that is inclined against the circumferential direction U, so that a force component radial outwards ensues.

Entrained by the clutch disk ring 32, the retainer ring 58 rotates until its spokes 60 come into contact with the retaining structure 62. The frictional force between the retainer ring 58 and the clutch disk ring 32 arrests the clutch disk ring 32 and, therefore, also the clutch disk arm 36 with regard to the rotating driving element 14. The protrusion 70 on the pawl 22 starts sliding radially outwards along the protrusion 72 on the rigid section 40 of the first clutch disk arm 36. Thereby, the pawl 22 is pivoted radially outwards and loses its engagement with the driven element 18.

As the pawl 22 does not receive an exceedingly high kinetic energy, the motion of the pawl 22 is stopped by a spring element 74 in the disengaged position that act as a pawl end stop and that keeps the pawl 22 from swiveling farther outwards than the disengaged position due to vehicle motions or during the normal disengagement of the clutch 10. The spring element 74 is attached to the face of the driving element 14 and extends essentially parallel to the face of the driving element 14. The spring element 74 is flexible and can be deflected radially outwardly by the free end 26 of the pawl 22, whereby a pretensioning force is generated acting radially inwards on the free end 26.

In the disengaged position, the protrusion 72 on the first clutch disk arm 36 lies directly radially below the protrusion 72 on the pawl 22. This results in the pawl 22 being locked against involuntary movement radially inwards and therefore into the engaged position. These kinds of movements may occur during a crash situation when the reversible drive 12 is inactive and the clutch 10 is not supposed to be engaged. However, due to the interaction of the protrusions 70, 72 the clutch 10 is secured against unintentional engagement.

To reengage the clutch 10, the reversible drive 12 again turns the driving element 14 in driving direction D and the pawl 22 will be once again pivoted inwards into engagement with the driven element 18 as described above.

However, should the pyrotechnic drive 11 be activated while the pawl 22 is in its engaged position, the clutch 10 will be decoupled so as not to impede the pyrotechnic drive 11 and a subsequent load limiting function of the seatbelt system.

The pyrotechnic drive 11 rotates the driven element 18 coupled to the seat belt spool. The resulting rotational velocity in driving direction D in this case is far higher than when the driven element 18 is rotated by the reversible drive 12.

As a result, the teeth 30 of the driven element 18 act on the pawl 22 and transmit a high kinetic energy to the pawl 22. The pawl 22 is accelerated radially outwards into its decoupled position.

On reaching the decoupled position, the free end 42 of the clutch disk arm 36 snaps below the tangential protrusion 76 on the pawl 22 so that the pawl 22 is locked to the clutch disk ring 32 in a latching connection. In the decoupled position, the pawl 22 is unable to engage the driven element 18 again, even if the reversible drive 12 rotates the driving element in driving direction D.

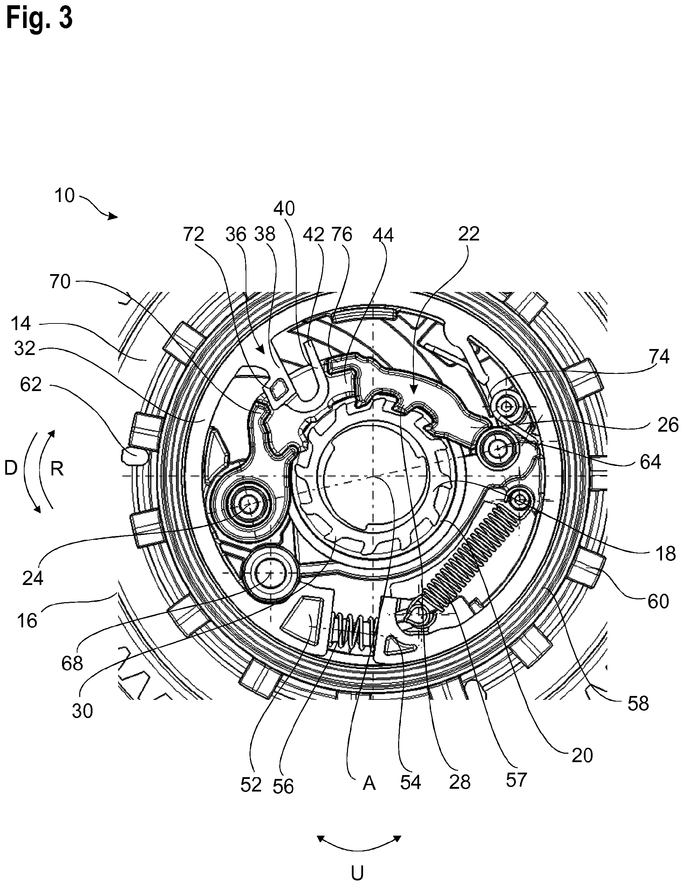

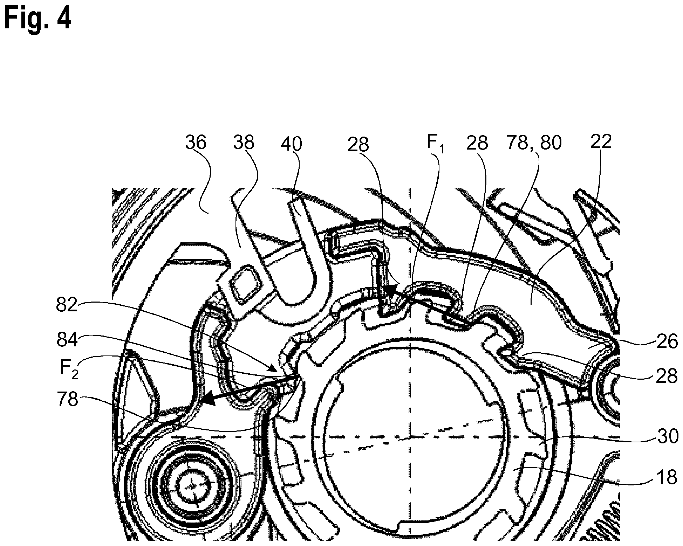

Figure 3 shows the ideal relative position between the pawl 22 and the driven element 18 for decoupling the pawl 22 (see also the enlarged detail in Figure 4). One of the teeth 30 of the driven element 18 lies with its flank 78 facing in driving direction D against the flank 80 of the middle tooth 28 of the pawl 22 facing in releasing direction R. Both flanks 78, 80 have approximately the same inclination, which is chosen so that an approximately tangentially directed force F₁ results that acts on the pawl 22. As it is evident from Figure 4, the pawl 22 will be deflected radially outwards into its decoupled position shown in Figure 7.

However, even in a simplified scenario, the seatbelt spool conducts several different motions in the initial phase of the activation of the pyrotechnic drive 11, before the driven element 18 rotates steadily.

When the snake initially contacts the drive pinion, due to the off-axis contact point and the high impulse of the accelerated mass of the snake, the seatbelt spool does not start to rotate immediately, but first is displaced slightly. Also, the frame of the seatbelt retractor is slightly elastically deformed, absorbing the impulse of the moving snake. Then, the seatbelt spool rebounds, and the seatbelt spool axis reverses its lateral displacement direction and is displaced in the opposite direction before returning to its regular centered position. These displacement motions take place shortly before the drive pinion and the seatbelt spool (and, therefore, also the driven element 18) start rotating with a high velocity.

Due to the general design of the clutch 10, the pawl 22 can be in any angular position with regard to the rotation axis A when the pyrotechnic drive 11 is activated. In most positions, the displacement motions of the seatbelt spool due to the impact of the snake and the rebound of the seatbelt spool are not critical as no forces act on the pawl 22 that might lead to an unintentional disengagement of the pawl 22 from the driven element 18. However, when the force resulting either from the first or the second displacement motion acts approximately in the direction towards the pivot axis 24 (ca. +/- 30° with regard to the radial direction r, or, correspondingly, along an imaginary line between the pivot axis 24 and the rotation axis A, see e.g. Figure 2), the pawl 22 receives a force that will swivel it radially outwards.

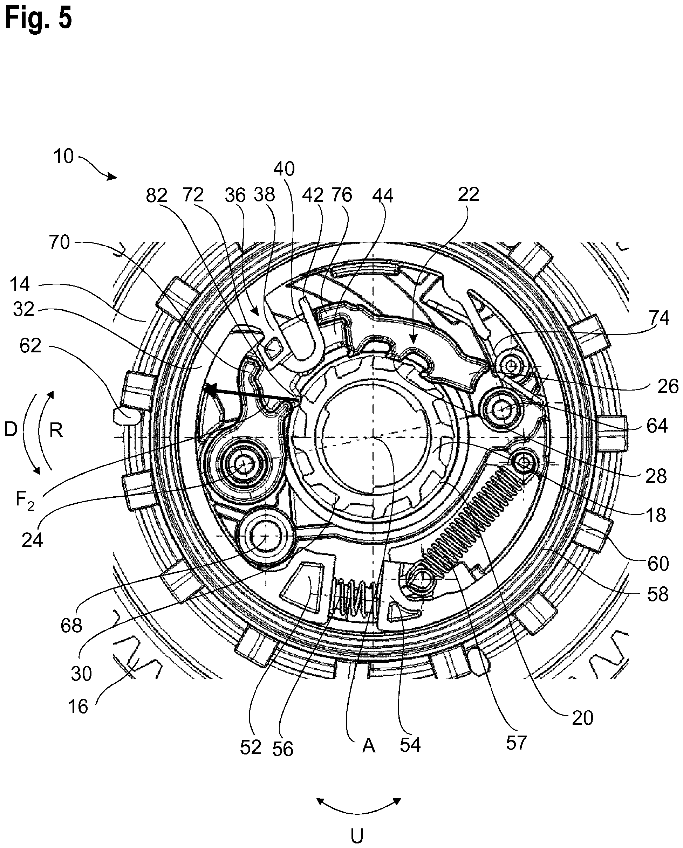

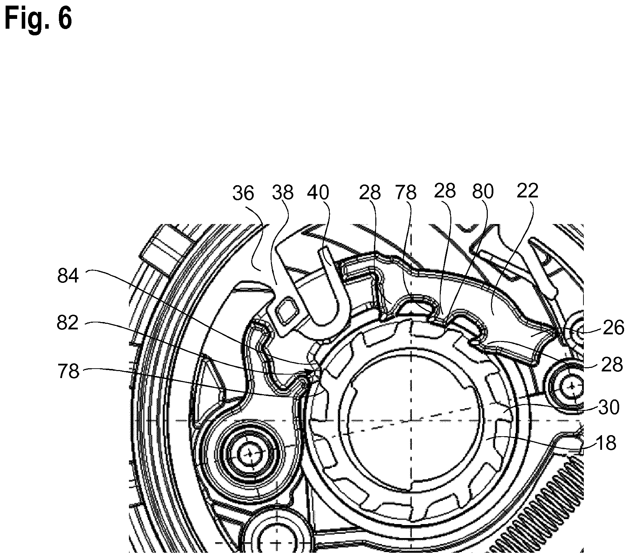

Such a situation is shown in Figures 5 und 6.

Due to the linear displacement of the driven element 18, the pawl teeth 28 of the pawl 22 have lost contact with the teeth 30 of the driven element 18. When the driven element 18 now is rotated by the pyrotechnical drive 11, contact between the teeth 30 of the driven element 18 and the teeth 28 of the pawl 22 will be undefined and less force will be transferred to the pawl 22 than in the ideal position shown in Figures 3 and 4.

To ensure safe decoupling of the pawl 22 in situations like these, the pawl 22 has a contact protrusion 82 that is located on a radial inner face of the pawl 22 (as are the teeth 28), but nearer to the pivot axis 24 than the teeth 28. In this example, the contact protrusion 82 is situated between the clutch disk arm 36 and the pivot axis 24 at the radial inner end of the left hand face of the recess 44.

The geometry of the contact protrusion 82 is here chosen so that, in the engaged position, it is always in contact with one of the teeth 30 of the driven element 18, when the pyrotechnic drive 11 is activated (see e.g. Figures 3 and 5).

During the reversible pretensioning process, in which the driven element 18 is rotated by the reversible drive 12, however, the contact protrusion 82 does not impart any momentum to the driven element 18 (see Figures 1 and 2).

As the contact protrusion 82 lies much nearer to the pivot axis 24 than the teeth 28 of the pawl 22, it moves slower radially outwards than the teeth 28 when the pawl 22 is deflected radially outwards by a seat belt spool impulse. Therefore, it will always be at a radial position where it will be engaged by one of the teeth 30 of the driven element 18 in a controlled manner when the pyrotechnic drive 11 starts to rotate the driven element 18. This contact between the driven element 18 and the contact protrusion 82 transfers a sufficient kinetic energy to pivot the pawl 22 all the way into its decoupled position, independent of the angular position of the pawl 22 when the pyrotechnic drive 11 is activated.

Generally, when the driven element 18 interacts with the tooth 28 (in this example the middle one of the three teeth 28), less kinetic energy is generated compared to an interaction of the driven element 18 with the contact protrusion 82, because the distance to the pivot axis 24 from the contact protrusion 82 is shorter that the distance from the tooth 28.

A flank 84 of the contact protrusion 82 in this embodiment has approximately the same inclination as the flank 78 of the teeth 30 of the driven element 18, approximately meaning in this example that the angle differs about +/- 15°. Therefore, the force vector of a force F₂ acting on the contact protrusion 82 is always directed radially outwards and always points between the pivot axis 24 and the clutch disk arm 36 so that the pawl 22 is pivoted radially outwards by the impact of the tooth 30 of the driven element 18 on the contact protrusion 82.

It is possible to design the pawl 22 so that the impulse for decoupling the pawl 22 will always be received by the contact protrusion 82 exclusively. However, it is also possible that, depending on the situation, the impulse for decoupling the pawl 22 will be taken up by one or more of the teeth 28 of the pawl 22.

Also, depending on the angular position of the pawl 22 when the pyrotechnic drive is activated, the pawl 22 may get a double impact during decoupling. In this case, first the driven element 18 contacts the tooth 28 and subsequently the driven element 18 also contacts the contact protrusion 82. Such a double impact may occur in certain situations because the outward motion of the contact protrusion 82 is much slower than that of the tooth 28. In this case, the kinetic energy imparted to the pawl 22 is maximized.

To return the clutch 10 from the decoupled position into the disengaged position, the driving element 14 is rotated in releasing direction R.

## Claims

1. A clutch (10) for a seat-belt tensioner in a vehicle, comprising
a driving element (14) adapted for being rotated in a driving direction (D) and in a releasing direction (R) and
a driven element (18) connectable with a seat-belt spool, the driving element (14) and the driven element (18) having a common rotation axis (A),
a pawl (22) being pivotally held at a pivot pin arranged on the driving element (14) and forming a pivot axis (24),
the pawl (22) comprising at least one tooth (28) for meshing with a toothing (30) of the driven element (18),
the pawl (22) being adapted to assume a disengaged position in which the pawl (22) is not in engagement with the driven element (14) and from which it can be pivoted radially inwards by turning the driving element (14) in driving direction (D), an engaged position in which the pawl (22) engages the driven element (18) and couples the driving element (14) with the driven element (18), and a decoupled position in which the pawl (22) is not in engagement with the driven element (18) and cannot be engaged with the driven element (18) by turning the driving element (14) in driving direction (D), **characterized in that**
the pawl (22) further comprises a rigid, radially inwardly directed contact protrusion (82) at a radial inner face of the pawl (22) for interacting with the driven element (18), the contact protrusion (82) being arranged between the at least one tooth (28) and the pivot axis (24),
and **in that** the driven element (18) interacts with the pawl (22) at the at least one tooth (28) and/or at the contact protrusion (82) when the pawl (22) moves from the engaged position into the decoupled position.

2. Clutch according to claim 1, **characterized in that** the clutch (10) further comprises a clutch disk ring (32) having an outer essentially circular circumference and a clutch disk arm (36) extending inwards into an opening (34) enclosed by the clutch disk ring (32), the clutch disk arm (36) interacting with the pawl (22) to guide the pawl (22) into and out of the engaged position.

3. Clutch according to claim 2, **characterized in that** the contact protrusion (82) is arranged between the clutch disk arm (36) and the pivot axis (24), while the at least on tooth (28) is arranged between the clutch disk arm (36) and a free end (26) of the pawl (22).

4. Clutch according to any of the preceding claims, **characterized in that** in the engaged position the contact protrusion (82) does not transmit any angular momentum to the driven element (18).

5. Clutch according to any of the preceding claims, **characterized in that** the contact protrusion (82) is arranged so that the driven element (18) always contacts the contact protrusion (82) when the pawl (22) moves from the engaged position into the decoupled position.

6. Clutch according to any of the preceding claims, **characterized in that** the contact protrusion (82) has a flank (84) that in the engaged position has essentially the same inclination as the teeth flanks (78) of the driven element (18) facing in driving direction (D).

7. Method for transferring a clutch (10) according to any of the preceding claims from the engaged position into the decoupled position, with the following steps:
- a pyrotechnic drive (11) coupled with the driven element (18) is activated,
- an impulse acting in a radially outwards direction is introduced into the pawl (22) by the driven element (18), in particular by a linear displacement of the driven element (18),
- the at least one tooth (28) of the pawl (22) looses contact with the driven element (18),
- a radially outwardly directed impulse is introduced to the contact protrusion (82) by the driven element (18), and
- the pawl (22) is pivoted radially outwards into the decoupled position as the driven element (18) is rotated in driving direction by the pyrotechnic drive (11).

8. Method according to claim 7, **characterized in that** a pulse is transferred to the pawl (22) first by the interaction of the driven element (18) with the tooth (28) and subsequently by the interaction of the driven element (18) with the contact protrusion (82) when the pawl (22) moves from the engaged position into the decoupled position.

9. Method according to claim 7, **characterized in that** impulse is transferred to the pawl (22) exclusively by the interaction of the driven element (18) with the contact protrusion (82) when the pawl (22) moves from the engaged position into the decoupled position.

## Patentansprüche

1. Kupplung (10) für einen Gurtstraffer in einem Fahrzeug, mit
einem Antriebselement (14), das in eine Antriebsrichtung (D) und eine Ausrückrichtung (R) drehbar ist und
einem Abtriebselement (18), das mit einer Gurtspule verbunden werden kann, wobei das Antriebselement (14) und das Abtriebselement (18) eine gemeinsame Drehachse (A) aufweisen,
einer Kupplungsklinke (22), die schwenkbar auf einem an dem Antriebselement (14) angeordneten Gelenkzapfen gelagert ist und eine Schwenkachse (24) bildet,
wobei die Kupplungsklinke (22) mindestens einen Zahn (28) zum Eingriff mit einer Verzahnung (30) des Abtriebselements (18) aufweist,
wobei die Kupplungsklinke (22) eine ausgesteuerte Stellung einnehmen kann, in der die Kupplungsklinke (22) sich nicht im Eingriff mit dem Abtriebselement (14) befindet und aus der sie radial nach innen durch das Drehen des Antriebselements (14) in Antriebsrichtung (D) geschwenkt werden kann, eine eingesteuerte Stellung, in der die Kupplungsklinke (22) in das Abtriebselement (18) eingreift und das Antriebselement (14) mit dem Abtriebselement (18) koppelt, und eine entkoppelte Stellung, in der die Kupplungsklinke (22) nicht mit dem Abtriebselement (18) in Eingriff steht und nicht durch das Drehen des Antriebselements (14) in Antriebsrichtung (D) mit dem Abtriebselement (18) in Eingriff gebracht werden kann, **dadurch gekennzeichnet, dass**
die Kupplungsklinke (22) weiterhin einen starren radial nach innen gerichteten Kontaktvorsprung (82) an einer radialen Innenseite der Kupplungsklinke (22) für das Zusammenwirken mit dem Abtriebselement (18) aufweist, wobei der Kontaktvorsprung (82) zwischen dem mindestens einen Zahn (28) und der Schwenkachse (24) angeordnet ist,
und dadurch, dass das Abtriebselement (18) mit der Kupplungsklinke (22) an dem mindestens einen Zahn (28) zusammenwirkt und/oder an dem Kontaktvorsprung (82), wenn die Kupplungsklinke (22) sich von der eingesteuerten Stellung in die entkoppelte Stellung bewegt.

2. Kupplung nach Anspruch 1, **dadurch gekennzeichnet, dass** die Kupplung (10) weiterhin einen Kupplungsscheibenring (32) mit einem im Wesentlichen kreisförmigen Umfang beinhaltet und einen Kupplungsscheibenarm (36) aufweist, der sich nach innen in eine Öffnung (34), die vom Kupplungsscheibenring (32) umschlossen ist, erstreckt, wobei der Kupplungsscheibenarm (36) mit der Kupplungsklinke (22) zusammenwirkt, um die Kupplungsklinke (22) in die und aus der eingesteuerte(n) Stellung zu führen.

3. Kupplung nach Anspruch 2, **dadurch gekennzeichnet, dass** der Kontaktvorsprung (82) zwischen dem Kupplungsscheibenarm (36) und der Schwenkachse (24) angeordnet ist, während der mindestens eine Zahn (28) zwischen dem Kupplungsscheibenarm (36) und einem freien Ende (26) der Kupplungsklinke (22) angeordnet ist.

4. Kupplung nach einem der vorhergehenden Ansprüche, **dadurch gekennzeichnet, dass** der Kontaktvorsprung (82) in der eingesteuerten Stellung keinen Drehimpuls auf das Abtriebselement (18) überträgt.

5. Kupplung nach einem der vorhergehenden Ansprüche, **dadurch gekennzeichnet, dass** der Kontaktvorsprung (82) derart angeordnet ist, dass das Abtriebselement (18) immer in Kontakt mit dem Kontaktvorsprung (82) steht, wenn sich die Kupplungsklinke (22) von der eingesteuerten Stellung in die entkoppelte Stellung bewegt.

6. Kupplung nach einem der vorhergehenden Ansprüche, **dadurch gekennzeichnet, dass** der Kontaktvorsprung (82) eine Flanke (84) aufweist, die in der eingesteuerten Stellung im Wesentlichen die gleiche Neigung wie die Zahnflanken (78) des Abtriebselements (18) in Antriebsrichtung (D) aufweisen.

7. Verfahren zur Übertragung einer Kupplung (10) nach einem der vorhergehenden Ansprüche von der eingesteuerten Stellung in die entkoppelte Stellung mit folgenden Schritten:
- ein pyrotechnischer Antrieb (11) gekoppelt mit dem Abtriebselement (18) wird aktiviert,
- ein Impuls, der in eine radial nach außen gehende Richtung wirkt, wird durch das Abtriebselement (18), insbesondere durch eine Linearverschiebung des Abtriebselements (18), in die Kupplungsklinke (22) eingebracht,
- der mindestens eine Zahn (28) der Kupplungsklinke (22) verliert den Kontakt zum Abtriebselement (18),
- ein radial nach außen gerichteter Impuls wird durch das Abtriebselement (18) in den Kontaktvorsprung (82) eingebracht, und
- die Kupplungsklinke (22) wird radial nach außen in die entkoppelte Stellung geschwenkt, wenn das Abtriebselement (18) durch den pyrotechnischen Antrieb (11) in Antriebsrichtung gedreht wird.

8. Verfahren nach Anspruch 7, **dadurch gekennzeichnet, dass** ein Impuls an die Kupplungsklinke (22) übergeben wird, zunächst durch die Interaktion des Abtriebselements (18) mit dem Zahn (28) und anschließend durch die Interaktion des Abtriebselements (18) mit dem Kontaktvorsprung (82), wenn sich die Kupplungsklinke (22) von der eingesteuerten Stellung in die entkoppelte Stellung bewegt.

9. Verfahren nach Anspruch 7, **dadurch gekennzeichnet, dass** der Impuls ausschließlich durch die Interaktion des Abtriebselements (18) mit dem Kontaktvorsprung (82) an die Kupplungsklinke (22) übergeben wird, wenn sich die Kupplungsklinke (22) von der eingesteuerten Stellung in die entkoppelte Stellung bewegt.

## Revendications

1. Embrayage (10) pour un prétensionneur de ceinture de sécurité de véhicule, comprenant
un élément d'entraînement (14) adapté pour être tourné dans une direction d'entrainement (D) et dans une direction de libération (R) et
un élément entraîné (18) pouvant être connecté à une bobine de ceinture de sécurité, l'élément d'entraînement (14) et l'élément entraîné (18) ayant un axe de rotation commun (A),
un cliquet (22) étant maintenu pivotant à un axe de pivotement disposé sur l'élément d'entraînement (14) et formant un axe de pivotement (24),
le cliquet (22) comprenant au moins une dent (28) destinée à engrener avec une denture (30) de l'élément entraîné (18),
le cliquet (22) étant adapté pour assurer une position désengagée dans laquelle le cliquet n'est pas engagé avec l'élément entrainé (14) et à partir de laquelle il peut être pivoté radialement vers l'intérieur en tournant l'élément d'entrainement (14) dans la direction d'entrainement (D), une position engagée pour laquelle le cliquet (22) engage l'élément entrainé (18) et accouple l'élément d'entrainement (14) avec l'élément entrainé (18), et une position désaccouplée pour laquelle le cliquet (22) est n'est pas engagé avec l'élément entrainé (18) et ne peut être engage avec l'élément entrainé (18) en tournant l'élément d'entrainement (14) dans une direction d'entrainement (D), **caractérisé en ce que**
le cliquet (22) comprend de plus une protrusion de contact (82), rigide, dirigée radialement vers l'intérieur située au niveau d'une face interne radiale du cliquet (22) pour interagir avec l'élément entraîné (18), la protrusion de contact (82) étant agencée entre la, au moins une, dent (28) et l'axe de pivotement (24),
et **en ce que** l'élément entraîné (18) interagit avec le cliquet (22) à au moins une dent (28) et/ou à la protrusion de contact (82) lorsque le cliquet (22) passe de la position engagée à la position désaccouplée.

2. Embrayage selon la revendication 1, **caractérisé en ce que** l'embrayage (10) comprend en outre un anneau de disque d'embrayage (32) ayant une circonférence externe essentiellement circulaire et un bras de disque d'embrayage (36) s'étendant vers l'intérieur dans une ouverture (34) entourée par l'anneau de disque d'embrayage. (32), le bras de disque d'embrayage (36) coopérant avec le cliquet (22) pour guider le cliquet (22) dans et hors de la position engagée.

3. Embrayage selon la revendication 2, **caractérisé en ce que** la protrusion de contact (82) est agencée entre le bras (36) du disque d'embrayage et l'axe de pivotement (24), tandis que la, au moins une dent (28) est agencée entre le bras du disque d'embrayage (36) et une extrémité libre (26) du cliquet (22).

4. Embrayage selon l'une quelconque des revendications précédentes, **caractérisé en ce que**, dans la position engagée, la protrusion de contact (82) ne transmet aucun moment angulaire à l'élément entraîné (18).

5. Embrayage selon l'une des revendications précédentes, **caractérisé en ce que** la protrusion de contact (82) est agencée de sorte que l'élément entraîné (18) entre toujours en contact avec la protrusion de contact (82) lorsque le cliquet (22) passe de la position engagée dans la position désaccouplée.

6. Embrayage selon l'une quelconque des revendications précédentes, **caractérisé en ce que** la protrusion de contact (82) présente un flanc (84) qui, dans la position engagée, présente sensiblement la même inclinaison que les flancs de denture (78) de l'élément entraîné (18) faisant face dans la direction d'entrainement (D).

7. Méthode pour passer un embrayage (10) selon l'une quelconque des revendications précédentes, de la position engagée à la position désaccouplée, selon les étapes suivantes :
- un entraînement pyrotechnique (11) couplé à l'élément entraîné (18) est activé,
- une impulsion agissant dans une direction radiale vers l'extérieur est introduite dans le cliquet (22) par l'élément entraîné (18), notamment par un déplacement linéaire de l'élément entraîné (18),
- la au moins une dent (28) du cliquet (22) perd le contact avec l'élément entraîné (18),
- une impulsion dirigée radialement vers l'extérieur est introduite dans la protrusion de contact (82) par l'élément entrainé (18), et
- le cliquet (22) pivote radialement vers l'extérieur dans la position désaccouplée lorsque l'élément entraîné (18) est entraîné en rotation dans la direction d'entraînement par l'entraînement pyrotechnique (11).

8. Méthode selon la revendication 7, **caractérisée en ce qu'**une impulsion est transférée au cliquet (22) d'abord par interaction de l'élément entraîné (18) avec la dent (28), et subséquemment par interaction de l'élément entraîné (18), avec la protrusion de contact (82) lorsque le cliquet (22) passe de la position engagée à la position désaccouplée.

9. Méthode selon la revendication 7, **caractérisée en ce que** l'impulsion est transférée au cliquet (22) exclusivement par l'interaction de l'élément entraîné (18) avec la protrusion de contact (82) lorsque le cliquet (22) passe de la position engagée dans la position désaccouplée.
